# EUROPEAN PATENT SPECIFICATION

(11) **EP 1 664 210 B1**
(45) Date of publication and mention of the grant of the patent: **15.02.2012**
(21) Application number: 04765488.4
(22) Date of filing: 17.09.2004
(51) Int. Cl.: C09D 5/02, C09D 133/06, C09D 125/06, C09D 125/16

(54) **STYRENE ACRYLIC COPOLYMER BASED WATERBORNE COATINGS**
WASSERLACKE AUF BASIS VON STYROLACRYLCOPOLYMERISAT
REVETEMENTS AQUEUX A BASE DE COPOLYMERES STYRENE-ACRYLIQUES

(30) Priority: 19.09.2003 EP 03021271
(43) Date of publication of application: 07.06.2006
(73) Proprietor: SigmaKalon B.V., 1422 AD Uithoorn (NL)
(72) Inventor: DARCY, Stephane, SigmaKalon Euridep, R & D Lab., F-90300 Sermamagny (FR); HOSOTTE, Philippe, SigmaKalon Euridep, R & D Lab., F-90300 Sermamagny (FR); PEQUIGNOT, Jean-Marc, SigmaKalon Euridep R & D Lab, F-90300 Sermamagny (FR); SALVADOR, Elisabeth, SigmaKalon Euridep, R & D Lab, F-90300 Sermamgny (FR)
(74) Representative: Smithson, Robert Alan
(86) International application number: PCT/EP2004/010620
(87) International publication number: WO 2005/028572

(56) References cited:
- US-A- 4 230 609
- US-A- 4 782 109
- US-A- 5 962 579

## Description

The present invention relates to an aqueous coating composition, particularly one useful for coating interior and exterior parts of buildings, a process for preparing the composition and the use of the composition for coating a substrate. In particular, although not exclusively, the present invention relates to an aqueous paint composition.

Paints which are typically applied to parts of buildings, for example ceilings or walls, generally comprise a polymeric binder, also referred to as a polymeric film-forming resin, particulate non-film-forming solid and a volatile vehicle. Typically, paints fall into one of two categories: solvent borne paints; and, waterborne paints. In solvent borne paints the volatile vehicle is an organic solvent and the polymeric binder is dispersed or dissolved in the organic solvent. In waterborne paints the polymeric binder is a dispersion of insoluble polymer in water. Waterborne paints are typically referred to as "emulsion paints".

Emulsion paints comprise a film-forming polymer which is insoluble in water and which is in the form of a colloidal dispersion (sometimes called an "emulsion" or a "latex"). They also comprise one or more particulate non-film-forming solids which can be pigments, such as titanium dioxide, or extenders such as powdered chalk. The paints usually also comprise a thickener.

The dispersed insoluble film-forming polymer is usually a vinyl or acrylic addition polymer, although alkyd, epoxy, polyurethane, or polyester polymers are also known. The dispersed insoluble polymer is inherently film-forming so that as the paint film dries, the polymer coalesces to form a continuous film. The coalesced film of insoluble polymer gives the final dried coating cohesion by binding together the pigment and extender and also provides the dried coating with adhesion to the underlying substrate. Both cohesion and adhesion are important in forming paints with good abrasion resistance and water resistance. These two qualities are particularly important in making practical robust paints that can withstand cleaning, for example by rubbing with a wet cloth to remove marks, an operation that is particularly common on interior walls. This property is generally referred to as scrub resistance.

Typically, solvent borne paints exhibit good hiding power, good cohesion (i.e. improved scrub resistance) and good adhesion in comparison with waterborne counterparts. Moreover, solvent borne paints are typically easy to apply. However, solvent borne paints are regarded as being less environmentally friendly than emulsion paints, because evaporation of the organic solvent causes atmospheric pollution. Suitably, solvent borne paints may contribute to smog and ozone depletion. Furthermore, upon evaporation of the organic solvent the localised air quality may deteriorate substantially thus posing a significant health and safety risk for persons in the vicinity. Suitably, persons applying the paint may suffer from multiple chemical sensitivities and feel nauseated. This effect is typically magnified if the solvent borne paint is applied indoors.

Consequently, attention has focussed on providing emulsion paints which exhibit improved cohesion and improved adhesion, so that the resultant coating exhibits, improved UV colour fastness, improved abrasion resistance (i.e. scrub resistance) and improved water resistance. Certain paint compositions have been suggested to replace conventional emulsion paints, which contain a silanol functionalised resin in solution instead of a dispersed polymer. The cross-linking of the silanol groups when the water evaporates typically provides these compositions with good scrub resistance. The disadvantage of using a silanol functionalised resin is that it necessitates the use of expensive silane functional raw materials and also the compositions may be unstable when stored in very warm conditions for long periods of time due to premature cross-linking of the silanol groups.

US 5962579 relates to a latex blend which is particularly beneficial when utilized in manufacturing coatings for concrete structures, and exhibits outstanding resistance to moisture vapour and has an improved tensile strength and elongation said latex being comprised of a blend latex blend having 2-45 % wt. solids and comprising a) 60-95 % wt. of a styrene acrylic latex and b) 5-40 % wt. of a diene-vinyl aromatic copolymer latex and c) a plasticizer.

Suitably, the invention of the present application aims to provide an improved aqueous coating composition.

Thus, according to a first aspect, the present invention provides an aqueous coating composition comprising a mixture of:
(i) an aqueous emulsion of a first polymeric film-forming resin; and
(ii) a second polymeric film-forming resin comprising an organic solution of a plasticised styrene acrylic copolymer emulsified in water.

Such aqueous coating compositions may be referred to hereinafter as "an aqueous coating composition of the present invention".

Suitably, the first polymeric film-forming resin as defined hereinafter is a conventional film-forming polymer resin, such as a vinylic or acrylic resin, employed in emulsion paints. Unexpectedly, it has been found that the inclusion of a second polymeric film-forming resin comprising an organic solution of a plasticised styrene acrylic copolymer emulsified in water in combination with an aqueous emulsion of the first polymeric film-forming resin typically provides an aqueous coating composition which exhibits improved adhesion and cohesion compared with a comparable aqueous coating composition which only includes either the first polymeric film-forming resin or the second polymeric film-forming resin. Suitably, the aqueous coating composition of the present invention may exhibit improved UV colour fastness, improved abrasion resistance and improved water resistance (i.e. scrub resistance) compared with waterborne counterpart compositions which include either the first polymeric film-forming resin or the second polymeric film-forming resin only.

By the term "aqueous emulsion of a first polymeric film-forming resin" we mean the first film-forming resin is insoluble in water and is in the form of an aqueous colloidal dispersion.

The second film-forming resin is dissolved in an organic solvent which is immiscible with water and the resultant organic solution emulsified in water. Preferably, the second film-forming resin is essentially an organic solution-in-water emulsion wherein the water is the predominant phase.

Suitably, the aqueous coating compositions of the present invention are water based and so the main liquid component is water. Conventional emulsion paints usually comprise, as well as water, a minor amount of an organic solvent, such as 2,2,4-trimethyl 1,3-pentanediol monoisobutyrate (Texanol™), Butyl Cellosolve™, or white spirit, to aid coalescence of the dispersed film - forming polymer. Preferably, the aqueous coating composition of the present invention includes less than or equal to 10 wt%, more preferably less than or equal to 8 wt%, even more preferably less than or equal to 5 wt%, even more preferably less than or equal to 3 wt%, based on the total weight of the aqueous coating composition, of organic solvents. Preferably, all of the organic solvent present in the aqueous coating composition is derived from the organic solvent-in-water emulsion of the plasticised styrene acrylic copolymer.

Preferably, the aqueous composition of the present invention comprises greater than or equal to 10 wt%, more preferably greater than or equal to 15 wt%, even more preferably greater than or equal to 20 wt%, most preferably greater than or equal to 25 wt%, based on that total weight of the composition of water. Preferably, the aqueous composition of the present invention comprises less than or equal to 55 wt%, more preferably less than or equal to 45 wt%, even more preferably less than or equal to 35 wt%, most preferably less than or equal to 30 wt%, based on the total weight of the compositions, of water. It will be appreciated the organic solvent of the second film-forming resin forms the balance of the liquid phase of the aqueous coating composition of the present invention.

Preferably, the plasticised styrene acrylic copolymer comprises less than or equal to 5 wt%, more preferably less than or equal to 3 wt%, most preferably less than or equal to 1 wt%, based on weight averaged molecular weight of the styrene acrylic copolymer, of one or more cross-linking comonomers. Most preferably, the styrene acrylic copolymer is non-crosslinked.

Preferably, the plasticised styrene acrylic copolymer includes essentially no functional groups which may react with complimentary functional groups present in the first polymeric film-forming resin. Suitably, the resultant film formed from the aqueous coating composition is essentially non-crosslinked. The styrene acrylic copolymer is essentially a linear polymer.

Preferably, the plasticised styrene acrylic copolymer itself (i.e. the styrene acrylic copolymer and plasticiser but not including the organic solvent and aqueous phase) is present in an amount of greater than or equal to 2 wt%, more preferably greater than or equal to 3 wt%, most preferably greater than or equal to 4 wt%, based on the total weight of the aqueous coating composition.

Preferably, the plasticised styrene acrylic copolymer itself (i.e. the styrene acrylic copolymer and plasticiser but not including the organic solvent and aqueous phase) is present in an amount of less than or equal to 15 wt%, more preferably less than or equal to 10 wt%, most preferably less than or equal to 7 wt%, based on the total weight of the aqueous coating composition.

The second polymeric film-forming resin comprising the styrene acrylic copolymer and plasticiser, and other non-aqueous soluble components if present, dissolved in an organic solvent, such as C₉-C₁₁ aliphatic hydrocarbons and the resultant organic solution is emulsified in an aqueous phase. It will be appreciated by those skilled in the art that it is necessary to include the appropriate amount of such an organic solvent-in-water emulsion so that the overall content of the styrene acrylic copolymer itself, organic solvent and plasticiser, in the aqueous coating composition of the present invention falls within the preferred limits as defined herein. Suitably, such amounts may be determined by routine experimentation based on the known concentration of styrene acrylic copolymer, and organic solvent and plasticiser if present, in the styrene acrylic copolymer aqueous mixture.

Although the styrene acrylic copolymer and plasticiser is in the form of an organic solvent-in-water emulsion, the styrene acrylic copolymer is essentially insoluble in water. The styrene acrylic copolymer is essentially formed from hydrophobic monomers as detailed hereinafter which typically have a solubility in water of less than 50 g/l at 25 °C and 1 bar.

Preferably, the styrene acrylic copolymer itself is present in an amount of greater than or equal to 10 wt% and less than or equal to 35 wt%, most preferably approximately 20 wt%, based on the total weight of the organic solution emulsified in water. Suitably, the organic solution of the styrene acrylic copolymer emulsified in water comprises less than or equal to 65 wt% and greater than or equal to 35 wt%, most preferably approximately 45 wt% of water. Suitably, the organic solution of the styrene acrylic copolymer emulsified in water comprises between 5 to 20 wt%, most preferably 15 wt% of an organic solvent. Suitably, the organic solution of the styrene acrylic copolymer emulsified in water comprises between 5 to 30 wt%, most preferably approximately 20 wt% of a plasticiser, based on the total weight of the organic solution emulsified in water.

Suitable organic solvents are well known to those skilled in the art and include 2,2,4-trimethyl-1,3-peritanediol monoisobutyrate (Texanol™), Butyl Cellosolve™ and white spirit.

Suitably, when the styrene acrylic copolymer is in the form of an aqueous mixture as defined herein, the aqueous mixture comprising 20 wt% of the styrene acrylic copolymer, 20% plasticiser, 45 wt% water and 15 wt% organic solvent has a Brookfield viscosity of (spindle number 1 at 60 rpm and at 25 °C) of greater than or equal to 30 cps and less than or equal to 60 cps, more preferably greater than or equal to 40 cps and less than or equal to 50 cps.

Preferably, the styrene acrylic copolymer is formed by polymerisation of a monomer mixture comprising one or more acrylic monomers as defined herein with one or more optionally substituted styrene monomers as defined herein.

Preferred acrylic monomers include acrylic acid, methacrylic acid and the esters of such acids. Preferred esters include alkyl (meth)acrylates which term refers to the corresponding acrylate or methacrylate ester which are usually formed from the corresponding acrylic or methacrylic acids by reaction with an alkanol. In other words the term "alkyl (meth)acrylate" refers to either an alkyl methacrylate or an alkyl acrylate. Other acrylic monomers include hydroxyl functional monomers such as hydroxyethyl acrylate, hydroxyethyl methacrylate and hydroxybutyl acrylate and gamine functional monomers such as dimethylaminoethyl methacrylate. Preferably, the styrene acrylic copolymer includes less than or equal to 10 wt%, more preferably less than or equal to 5 wt%, most preferably essentially no hydroxy and/or amine functional acrylic monomers.

Preferably, the alkyl (meth)acrylate is a (C₁-C₂₂)alkyl (meth)acrylate. Examples of C₁-C₂₂ alkyl groups of the alkyl (meth)acrylates includes methyl, ethyl, n-propyl, n-butyl, iso-butyl, tert-butyl, iso-propyl, pentyl, hexyl, cyclohexyl, 2-ethyl hexyl, heptyl, octyl, ethylhexyl, nonyl, decyl, isodecyl, undecyl, dodecyl, tridecyl, tetradecyl, pentadecyl, hexadecyl, heptadecyl, octadecyl, nonadecyl, eicosyl, behenyl, and isomers thereof. When there are sufficient number of carbon atoms, the alkyl group may be straight or branched chain. Preferably, the (C₁-C₂₂)alkyl (meth)acrylate is a (C₁-C₈)alkyl methacrylate, in particular methyl methacrylate, ethyl acrylate, butyl acrylate, butyl methacrylate and 2-ethylhexyl acrylate, and isomers thereof.

Preferably, the styrene acrylic copolymer is derived from a monomer mixture comprising two or more alkyl (meth)acrylate monomers as defined herein, in particular butyl methacrylate, especially iso-butyl methacrylate, and 2-ethylhexyl acrylate.

Preferably, the styrene acrylic copolymer includes less than or equal to 10 wt%, based on the weight average molecular weight of the styrene acrylic copolymer, more preferably less than or equal to 5 wt%, most preferably essentially no acrylic acid monomers.

Preferably, the styrene acrylic copolymer includes less than or equal to 10 wt%, based on the weight average molecular weight of the styrene acrylic copolymer, more preferably less than or equal to 5 wt%, most preferably essentially no methacrylic acid monomers.

Highly preferred acrylic monomers consist essentially of one or more alkyl (meth)acrylate monomers as defined herein.

Preferably, the styrene acrylic copolymer comprises greater than or equal to 30 wt%, more preferably greater than or equal to 40 wt%, most preferably greater than or equal to 45 wt%, based on the weight average molecular weight of the styrene acrylic copolymer, of one or more acrylic monomers as defined herein.

Preferably, the styrene acrylic copolymer comprises less than or equal to 60 wt% more preferably less than or equal to 55 wt%, most preferably less than or equal to 50 wt%, based on the weight average molecular weight of the styrene acrylic copolymer, of one or more acrylic monomers as defined herein.

Preferred optionally substituted styrene monomers include unsubstituted styrene and styrene substituted with one or more C₁-C₆ alkyl substituents. The styrene may be substituted at the α or β position of the ethylene group or on the aromatic ring, or at a combination of these positions. Preferably, the styrene is substituted at the α or β position of the ethylene group.

More preferred optionally substituted styrene monomers include unsubstituted styrene and styrene substituted with one or more C₁-C₆ alkyl substituents, such as methyl, ethyl, propyl, butyl, pentyl or hexyl which alkyl group when there are sufficient number of carbon atoms may be straight or branched chain. Highly preferred optionally substituted styrene monomers include unsubstituted styrene and mono substituted C₁-C₆ alkyl styrene, particularly mono substituted C₁-C₄alkyl styrene such as butyl styrene.

Preferably, the styrene acrylic copolymer comprises greater than or equal to 40 wt%, more preferably greater than or equal to 45 wt%, most preferably greater than or equal to 50 wt%, based on the weight average molecular weight of the styrene acrylic copolymer, of one or more optionally substituted styrene monomers as defined herein.

Preferably, the styrene acrylic copolymer comprises less than or equal to 70 wt%, more preferably less than or equal to 60 wt%, most preferably less than or equal to 55 wt%, based on the weight average molecular weight of the styrene acrylic copolymer, of one or more optionally substituted styrene monomers as defined herein.

Preferably, the styrene acrylic copolymer is derived essentially from a monomer mixture comprising one or more alkyl (meth)acrylate monomers a defined herein and one or more optionally substituted styrene comonomers as defined herein. In other words, the alkyl (meth)acrylate and optionally substituted styrene monomers represent greater than 99%, preferably 100%, of the monomers present in the styrene acrylic copolymer.

Suitable plasticisers are well known to those skilled in the art and include phthalic anhydride esters, trimellitic acid esters, hydrogenated terphenyls, chlorinated parrafins as disclosed in US 5,962,579. Preferably, the one or more plasticisers comprises a chloroparaffin or an alkyl phthalate. The plasticiser may be present in an amount of greater than or equal to 70 wt% and less than or equal to 20 wt%, most preferably 50 wt%, based on the weight averaged molecular weight of the styrene acrylic copolymer.

Preferably, the styrene acrylic copolymer includes less than 5 wt%, more preferably less than 3 wt%, most preferably less than 2 wt%, of one or more adjuvants, such as in can preservation agents i.e. methyl iso-thiazolinone or chloro methyl isothiazolinone.

Preferably, the styrene acrylic copolymer itself has a weight averaged molecular weight of greater than or equal to 30,000, more preferably greater than or equal to 50,000, most preferably greater than or equal to 70,000.

Preferably, the styrene acrylic copolymer itself (i.e. in the absence of any plasticiser and further adjuvants as defined herein) has a weight averaged molecular weight of less than or equal to 400,000, more preferably less than or equal to 200,000, most preferably less than or equal to 100,000.

Preferably, the styrene acrylic copolymer itself (i.e. in the absence of any plasticiser and further adjuvants as defined herein) has a glass transition temperature (Tg) of less than or equal to 70 °C and greater than or equal to 35 °C. Preferably, the glass transition temperature of the styrene acrylic copolymer and plasticiser is less than or equal to 50 °C and greater than or equal to -10 °C, preferably greater than or equal to 0 °C. Glass transition temperatures may be determined by routine experimentation using the Fox equation, employing a pre-dried (at 105 °C for 2 hours) sample of the styrene acrylic copolymer, with a heating rate of 4 °C min⁻¹ over a temperature range of -60 to +150 °C and a modulation rate of ±1 °C per 55 sec.

Suitably, the styrene acrylic copolymer may be prepared by techniques well known to those skilled in the art, such as emulsion polymerisation, dispersion polymerisation or solution polymerisation as exemplified in US 5130369 and US 5294692. A particularly preferred plasticised styrene acrylic copolymer is Hydro Pliolite 03 ™ sold by ELIOKEM of 14 avenue des Tropiques, 91955 Courtaboeuf, Cedex, France.

Preferably, the first polymeric film-forming resin is a conventional film-forming polymer resin selected from the group consisting of a vinylic resin, an acrylic resin, a polyurethane resin, alkyds, styrene acrylic resins and polyalkyl siloxanes. Suitable vinylic resins include homo and copolymers of vinyl acetate. Preferably, the first polymeric film-forming resin is an acrylic resin as defined hereinafter.

It will be appreciated by those skilled in the art that the first polymeric film-forming resin (which may also be referred to as a latex) is distinct from a polymer thickener, such as a polyurethane thickener, which may also be added to the aqueous composition of the present invention. Suitably, a polymeric thickener comprises one or more, preferably two or more, functional groups which may react (i.e. bond) with two or more complimentary groups of the first polymeric film-forming resin, thereby forming a "bridged" structure. Although the first polymeric film-forming resin may also function as a thickener, preferably the first film-forming polymeric film-forming resin does not function as a thickener (i.e. the first polymeric film-forming resin is non-thickening). Suitably, the first polymeric film-forming resin does not include one or more functional groups which may react (i.e. bond) with other complimentary functional groups present in the first polymeric film-forming resin.

As will become apparent hereinafter, the first polymeric film-forming resin is in the form of an aqueous emulsion where the resin is dispersed within the aqueous phase of the aqueous coating composition of the present invention.

Suitably, the first polymeric film-forming resin is insoluble in water. Preferably, the first polymeric film-forming resin is essentially formed from hydrophobic monomers as detailed hereinafter which typically have a solubility in water of less than. 50 g/l at 25 °C and 1 bar. In contrast, polymeric thickeners are typically either water soluble or water swellable. The aqueous composition of the present invention may however include a polyurethane based thickener in addition to the first polymer film-forming resin. Preferably, such thickeners are non-film-forming resins.

Preferably, the first polymeric film-forming resin itself is present in an amount of greater than or equal to 1 wt%, more preferably greater than or equal to 2 wt%, most preferably greater than or equal to 3 wt%, especially greater than or equal to 3.5 wt% based on the total weight of the aqueous coating composition.

Preferably, the first polymeric film-forming resin itself is present in an amount of less than or equal to 20 wt%, more preferably less than or equal to 10 wt%, even more preferably less than or equal to 8 wt% based on the total weight of the aqueous coating composition.

Preferably, the ratio by weight of the first polymeric film-forming resin to the plasticised styrene acrylic copolymer (i.e. styrene acrylic copolymer and plasticiser) in the aqueous coating composition is 2:1 to 1:4, more preferably 1:1 to 1:3.

The first polymeric film-forming resin employed in the aqueous coating composition is in the form of an aqueous dispersion, wherein the first film-forming polymer is dispersed in water. It will be appreciated by those skilled in the art that as the first polymeric film-forming resin is in the form of an aqueous dispersion, then it is necessary to include the appropriate amount of such a dispersion so that the overall content of the first polymeric film-forming resin itself in the aqueous coating composition of the present invention falls within the preferred limits as defined hereinbefore.

Preferably, the first polymeric film-forming resin is present in an amount of greater than or equal to 30 wt%, more preferably greater than or equal to 40 wt%, especially approximately 50 wt%, based on the total weight of the aqueous emulsion comprising the first polymeric film-forming resin. Preferably, the first polymeric film-forming resin is present in an amount of less than or equal to 70 wt%, more preferably less than or equal to 60 wt%, most preferably less than or equal to 55 wt%, based on the total weight of the aqueous emulsion comprising the first polymeric film-forming resin. Suitably, essentially water makes up the balance of the emulsion.

Thus the aqueous emulsion of the first polymeric film-forming resin preferably has a solid contents of greater than or equal to 30% by wt, more preferably greater than or equal to 40% by wt, most preferably greater than or equal to 50% by wt based on the total weight of the aqueous emulsion. Preferably, the aqueous emulsion of the first polymeric film-forming resin has a solids content of less than or equal to 70% by wt, more preferably less than or equal to 60% by wt, most preferably less than or equal to 55% by wt based on the total weight of the aqueous emulsion.

Suitably, when the first polymeric film-forming resin is in the form of an aqueous dispersion, then the aqueous dispersion comprising 48 wt% of the first polymeric film-forming resin preferably has a Brookfield viscosity (60 rpm and 25 °C) of greater than or equal to 100 mPa.s and less than or equal to 1,500 mPa.s, more preferably greater than or equal to 200 mPa.s and less than or equal to 1,000 mPa.s, especially 500±300 mPa.s.

Preferably, the number average particle size of the first polymeric film-forming resin in the aqueous dispersion is between 20 to 300 nm, more preferably between 80 to 200 nm, most preferably approximately 100 nm (as measured by sieving).

Preferably, the first polymeric film-forming resin has a weight average molecular weight of greater than or equal to 150,000, more preferably greater than or equal to 225,000, most preferably greater than or equal to 300,000.

Preferably, the first polymeric film-forming resin has a weight average molecular weight of less than or equal to 700,000, more preferably less than or equal to 600,000, most preferably less than or equal to 500,000.

Preferably, the first polymeric film-forming resin includes less than or equal to 50 wt% based on the weight average molecular weight of the first film-forming resin, more preferably less than or equal to 10 wt%, more preferably less than or equal to 2 wt%, most preferably essentially no styrene monomers. Preferably, the first polymeric film-forming resin includes less than or equal to 5 wt%, based on the weight average molecular weight of the first film-forming resin, more preferably less than or equal to 2 wt%, most preferably essentially no urethane monomers. Preferably, the first polymeric film-forming resin includes less than or equal to 5 wt%, based on the weight average molecular weight of the first film-forming resin, more preferably less than or equal to 2 wt%, most preferably essentially no cellulosic polymer.

Preferably, the first polymeric film-forming resin comprises a homopolymer or copolymer acrylic resin formed by the polymerisation of a monomer mixture comprising one or more acrylic monomers. Preferred acrylic monomers include acrylic acid, methacrylic acid and esters of such acids. Preferred esters includes alkyl (meth)acrylates such as defined hereinbefore with reference to the styrene acrylic copolymer. Other acrylic monomers include hydroxy functional monomers such as hydroxyethyl acrylate, hydroxyethyl methacrylate and hydroxybutyl acrylate and amine functional monomers such as dimethyl aminoethyl acrylate. Preferably, the first polymeric film-forming resin comprises a copolymer formed by polymerisation of a monomer mixture comprising one or more acrylic monomers. More preferably, the first film-forming resin comprises a copolymer formed by polymerisation of a monomer mixture consisting essentially of one or more acrylic monomers as defined herein. In other words, the first polymeric film-forming resin is essentially an acrylic resin wherein greater than 99%, preferably 100%, of the monomers making up the resin are acrylic monomers.

Preferred acrylic resins may also comprise C₈₋₃₀ hydrophobic alkyl chains. Such hydrophobic chains may be introduced by including a monomer having alkyl chains such as decyl acrylate, dodecyl acrylate, lauryl methacrylate, stearyl methacrylate or stearyl itaconate. Alternatively, or additionally, such alkyl chains can also be indirectly attached to the polymer chain by a linking group, for example via a poly(ethylene glycol) chain.

Highly preferred first polymeric film-forming resins include the essentially acrylic resins Rhodopas D2040 supplied by Rhodia PPMC of 40 rue de Haie-Coq, Aubervilliers, Cedex, France and Mowilith DM772 supplied by Cellanese, c/o Ticona France, 6 rue Jaurès, 92807 Puteaux, Cedex, France. An especially preferred first polymeric film-forming resin is the acrylic resin Rhodopas D2040.

Preferably, the first polymeric film-forming resin, the second polymer film-forming resin, and/or the aqueous coating composition of the present invention is essentially free of silanol groups and hydrolysable silane groups.

Although, the first film-forming resin may be cross-linked or non-crosslinked, preferably, the first film-forming polymer is non-crosslinked. The first polymeric film-forming resin is essentially a linear polymer. Preferably, the first polymeric film-forming resin does not include any function groups which may react with complimentary functional groups of the styrene acrylic copolymer.

Suitably, the first film-forming resin may include greater than or equal to 0.01 wt%, preferably greater than or equal to 0.02 wt%, more preferably greater than or equal to 0.04 wt%, based on the total weight of the aqueous emulsion of the first film-forming resin, of one or more free-radical initiators as defined hereinbefore. Suitably, the first film-forming resin may include less than or equal to 5 wt%, preferably less than or equal to 2 wt%, most preferably less than or equal to 1 wt%, especially less than or equal to 0.05 wt%, based on the total weight of the aqueous emulsion of the first film-forming resin, of one or more free-radical initiators are defined hereinbefore.

Suitably, the first film-forming resin and the aqueous emulsion of the first film-forming resin may be prepared by techniques well known to those skilled in the art such as emulsion, suspension or dispersion polymerisation.

Preferably, the aqueous coating composition of the present invention includes one or more non-film-forming particulate solids, such as pigments and extenders. Preferably, the non-film-forming particulate solids have a number average particle size from 50 nm to 150 µm.

Pigments provide the final coating film with opacity, that is the ability to hide the underlying substrate. Preferably, the aqueous coating composition includes one or more pigments. Suitable pigments include finely divided titanium dioxide, such as rutile and anatase titanium dioxides. Any grade useful for making paints can be used in the aqueous coating composition. Alternatively, or additionally, organic non-film-forming pacifying pigments such as Ropaque™ may be employed.

Preferably, the aqueous coating composition of the present invention include between 5 to 25 wt%, based on the total weight of the aqueous coating composition, more preferably 10 to 20 wt% or one or more pigments.

Extenders are particulate non-film-forming solids which are typically added to paints to lower the cost, to modify the rheology, or to inhibit pigment particle agglomeration. Typically, extenders have no or little opacifying effect and are not considered to be pigments. Extenders are finely divided inorganic materials that are insoluble in water. Suitably, the aqueous coating composition of the present invention includes one or more extenders. Suitable extenders include oxy compounds of calcium, magnesium, aluminium and silicon, such as chalk, sand, limestone, barytes, clays and talc.

Preferably, the aqueous composition of the present invention includes greater than or equal to 20 wt%, more preferably greater than or equal to 30 wt%, especially approximately 35 wt%, based on the total weight of the aqueous coating composition, of one or more extenders. Preferably, the aqueous composition of the present invention includes less than or equal to 60 wt%, more preferably less than or equal to 55 wt%, especially less than or equal to 50 wt%, based on the total weight of the aqueous coating composition, of one or more extenders.

Preferably, the aqueous coating composition of the present invention includes one or more thickeners for increasing the viscosity of the coating composition. Preferably, the thickener is a separate physical entity than the first and/or second polymeric film-forming resins. Thickeners vary widely in their chemical form, but are typically water soluble or water swellable polymers having hydrophilic groups. The most commonly used thickeners are based on modified cellulose, however polyurethane based thickeners may also be employed. Preferably, the aqueous coating composition of the present invention includes greater than or equal to 0.1 and less than or equal to 7 wt%, more preferably greater than or equal to 0.2 and less than or equal to 3 wt%, especially approximately 1 wt%, based on the total weight of the aqueous composition, of one or more thickeners. It will be appreciated that such thickeners are distinct from the first polymeric film-forming resin as defined herein.

Suitably, the aqueous coating composition of the present invention has a Brookfield viscosity (Brookfield RV-Spindle 6 at 50 rpm) of greater than or equal to 5 Pa.s and less than or equal to 15 Pa.s, especially approximately 10 Pa.s.

Suitably, the aqueous coating composition may include one or more further adjuvants typically used in coating compositions, for example antibacterial agents, anti-foaming agents, surfactants, emulsifiers, pH regulators, wetting agents and dry film protection agents. Preferably, the aqueous coating composition includes up to 6% by weight, based on the total weight of the aqueous coating composition, more preferably up to 3% by weight, most preferably up to 2% by weight of one or more such adjuvants.

Preferably, the total PVC of the aqueous coating composition is between 40 to 85%, more preferably 55 to 80%, especially 60 to 70%.

By the term total PVC we mean the total amount of non-film-forming particulate solid (i.e. pigment and extender) present expressed as percentage of the theoretical total volume of the dried paint. The theoretical total volume is calculated on the basis of the non-volatile components of the paint composition and excludes any air which may become trapped in the dried film and increase the volume.

Typically, the opacity of an emulsion paint can be improved by using a relatively high PVC i.e. above 50% and preferably above 60%. However, typically increasing the PVC of an aqueous coating composition results in a decrease in cohesion and adhesion and so the scrub resistance tends to be poor. Moreover, the water resistance and colour fastness of the tinted paint will tend to decrease with increasing PVC. One method of improving opacity at low PVC (i.e. increase adhesion and cohesion) is to increase the amount of pigment in the coating composition relative to the extenders. However, the pigment is typically far more expensive than the extenders, and this route represents an uneconomic solution.

Unexpectedly, it has been found that the combination of a first polymeric film-forming resin and a plasticised styrenic acrylic copolymer resin in the form of an organic solvent-in-water emulsion, typically permits the formation of a high PVC aqueous coating (i.e. improved opacity) which typically exhibits improved adhesion, improved washout colour fastness and improved film water sensitivity, compared with an aqueous coating composition including only the first film-forming resin or only the styrene acrylic copolymer as an organic solvent-in-water emulsion.

Suitably, according to a preferred embodiment of the present invention, the aqueous coating composition is an aqueous paint composition (i.e. an emulsion paint).

A highly preferred aqueous coating composition of the present invention essentially consists of:
(i) 1 to 20 wt% of the first polymeric film-forming resin;
(ii) 2 to 15 wt% of the plasticised styrene acrylic resin;
(iii) 5 to 25 wt% of one or more pigments;
(iv) 30 to 60 wt% of one or more extenders;
(v) 0.1 to 7 wt% of one or more thickeners;
(vi) 0 to 6 wt% of one or more adjuvants selected from antibacterial agents, antifoaming agents, pH regulators, wetting agents and dry film protection agents and combinations thereof;
(vii) 3 to 8 wt% of an organic solvent; and
(viii) water present in an amount of greater than or equal to 10 wt% based on the total weight of the aqueous coating composition, such that the sum of the percent by weight of each of the components (i) to (viii) totals 100% by weight.

The aqueous coating compositions of the present invention are typically made by mixing each of the components. One preferred method is to disperse the pigments, extenders and adjuvants (where present) in water to form a base, to which is added the organic solvent-in-water emulsion of the plasticised styrene acrylic copolymer, the aqueous emulsion of the first polymeric film-forming polymer and the one or more thickeners, if present. Alternatively, some or all of the pigments and extenders may be dispersed in a mixture comprising the aqueous emulsion of the first polymeric film-forming polymer, the organic solvent-in-water emulsion of the plasticised styrene acrylic resin and the one or more thickeners, if present. Mixing of the ingredients may be performed using conventional mixing devices normally used in the paint industry, for example; dispersers.

Thus according to a second aspect, the present invention provides a process for manufacturing an aqueous coating composition as defined herein, comprising contacting, preferably mixing, an aqueous emulsion of a first polymeric film-forming resin as defined herein with an organic solvent-in-water emulsion of a plasticised styrene acrylic copolymer. Suitably, the other optional, albeit preferred ingredients (i.e. extenders, pigments etc) may be added as required.

The aqueous coating compositions of the present invention can be applied both inside and outdoors, for example on renderings, wall coverings and ceilings, such as brick, wood, cement, and concrete. The aqueous coating compositions are preferably used for outdoor applications, for example on facade, bargeboards and the like.

The aqueous coating compositions of the present invention can be applied by conventional means such as brushing, spraying or roller coating. The paints are generally left to dry at ambient temperature (around 5 to 30 °C).

Thus according to a third aspect, the present invention provides a method of coating a substrate comprising applying the aqueous coating composition of the present invention to a substrate. Preferably, a layer of the coating composition is applied to the substrate. More preferably, the layer of the coating composition is caused to or allowed to dry.

Preferably, the substrate comprises a component for use in construction, for example, made from brick, wood, cement, concrete or metal. Suitable substrates include bricks, walls, facades, bargeboards etc.

According to a fourth aspect, the present invention provides a substrate comprising a layer of the aqueous coating composition of the present invention.

According to a fifth aspect, the present invention provides the use of a first polymeric film-forming resin as defined herein in combination with an organic solvent-in-water emulsion of a plasticised styrene acrylic copolymer film-forming resin as defined herein for improving the UV colour fastness of a layer of an aqueous emulsion paint.

According to a sixth aspect, the present invention provides the use of a first polymeric film-forming resin as defined herein in combination with an organic solvent-in-water emulsion of a plasticised styrene acrylic copolymer film-forming resin as defined herein for improving the washout colour fastness of a layer of an aqueous emulsion paint.

According to a seventh aspect, the present invention provides the use of a first polymeric film-forming resin as defined herein in combination with an organic solvent-in-water emulsion of a plasticised styrene acrylic copolymer film-forming resin as defined herein for improving the film water sensitivity of a layer of an aqueous emulsion paint.

According to an eighth aspect, the present invention provides the use of a first polymeric film-forming resin as defined herein in combination with an organic solvent-in-water emulsion of a plasticised styrene acrylic copolymer film-forming resin as defined herein for improving the cohesion of a layer of an aqueous emulsion paint.

According to a ninth aspect, the present invention provides the use of a first polymeric film-forming resin as defined herein in combination with an organic solvent-in-water emulsion of a plasticised styrene acrylic copolymer film-forming resin as defined herein for improving the adhesion of a layer of an aqueous emulsion paint.

For the avoidance of doubt the features of the first, second, third, fourth, fifth, sixth, seventh, eighth and ninth aspects of the present invention, respectively, are regarded as preferred features of the other aspects of the present invention.

The invention will be further described by way of the following non-limiting examples with reference to the accompanying figures, wherein:

In the examples the following materials were employed:

### 1 Resins

(i) Rhodopas D2040 (referred to as D2040) an acrylic ester resin in the form of an anionic aqueous emulsion having a solids content of 48% by weight available from Rhodia PPMC of 40 rue de la Haie-Coq, 93306 Aubervilliers, Cedex, France.
(ii) Mowilith DM772 (referred to as DM772) an acrylic ester resin in the form of an anionic aqueous emulsion having a solids content of 46% by weight available from Cellanese of 6 rue Jaurès, 92807 Puteaux, Cedex, France.
(iii) Hydro Pliolite 03 a substituted styrene acrylic copolymer including a plasticiser having a solids content of 40% by weight, water content of 45% by weight and an organic solvent content (Varsol D40) of 15% by weight available from ELIOKEM of 14, avenue des Tropiques, Courtaboeuf, Cedex, France.

### 2. Pigments and Fillers

Luzenac OXO™ a talc filler supplied by Luzenac.
Tiona 568™ a titanium dioxide (TiO₂) pigment supplied from Millennium.
Durcal 5™ a calcium carbonate (CaCO₃) filler supplied by Omya.

### 3. Thickeners

Cellosize HEC™ cellulosic thickener supplied by Dow.

### 4. Miscellaneous additives

Biocide K10ME™ biocide supplied by Progiven.
Dispelair CF107™ an anti-foaming agent supplied by Blackburn Chemicals.
Ammonia 20%.
Coatex P90™ a wetting agent supplied by Coatex.

### General method of making an aqueous coating composition

(1) The styrene acrylic copolymer (2 parts) is added to water (1 part) and the mixture stirred with a disperser rotating at 400 to 600 rpm;
(2) Biocide, the anti-foaming agent, and the cellulosic thickener are added and the resultant mixture dispersed for a further 5 minutes;
(3) Ammonia (20%) is added and the mixture dispersed for a further 10 minutes;
(4) The wetting agent, pigment and filler are added and the mixture dispersed for a further 20 minutes;
(5) The first polymeric film-forming resin is added and the mixture dispersed for a further 20 minutes; then
(6) Further thickener and water is added to attain the desired viscosity and water content, and the mixture dispersed for a further 10 minutes.

### Testing

Aqueous coating compositions in these examples were subjected to the following tests. Each test was conducted on ten samples and the results averaged.

### Adhesion

Concrete panels are cleaned with water and then dried (1 week at 50 °C and 50% relative humidity and 3 weeks at 23 °C and 50% relative humidity). A first layer of the aqueous coating composition is applied to a major surface of the panel with a roller and the panel dried (24 hours at 23 °C and 50% relative humidity). After which, a second layer of the aqueous coating composition is applied at a prescribed spreading rate of 6 to 8m² per litre, and the panel dried (1 week at 23 °C and 50% relative humidity). Adhesion of the aqueous coating composition is measured with a POSITEST AT-C dynamometer available from Labomat Essor.

### UV Colour Fastness

The weatherability of an aqueous coating composition employing UVB 313 nm lights is conducted in accordance with Standard NF EN ISO 11507.

Two layers of aqueous coating composition are brushed onto an aluminium panel from Q-Panel. The sample is dried after each layer has been applied (24 hours at 23 °C and 50% relative humidity). The colour of the sample was measured with a spectrophotometer. The sample was then irradiated with UVB 313 nm light for 1,000 hours, the sample dried (24 hours at 23 °C and 50% relative humidity) and the colour of the sample measured with a spectrophotometer. The colour difference (ΔE) following irradiation provides a value for UV colour fastness.

### Water Colour Fastness

Two layers of aqueous coating composition are brushed onto a concrete panel. The sample is dried after each layer has been applied (24 hours at 23 °C and 50% relative humidity). The panels are positioned at an angle of 60° to the horizontal and a stream of water droplets (flow rate of 2 litres per hour) at room temperature allowed to stream down the panels for 3 to 8 hours. The panel is then dried (24 hours at 23 °C and 50% relative humidity) and a visual inspection is made of the discolouration of the water exposed area.

### Film Water Sensitivity

The scrub resistance of a layer of the aqueous coating composition is evaluated in accordance with DIN 53778. This test permits an evaluation of film cohesion and also water sensitivity.

### Water Sensitivity

A 200 µm wet layer of the aqueous coating composition is drawn down on a Lenata card and the card dried for 24 hours at 23 °C and 50% relative humidity. A water droplet is placed on the film surface. After 3 minutes the wet surface is rubbed with a smooth cloth and the extent of colouration on the cloth is observed visually.

### Rain Test

A coloured (non-white) aqueous coating composition is applied to a concrete panel with a roller and the composition dried (24 hours at 23 °C and 50% relative humidity). A second layer of the aqueous coating composition tinted white is applied and dried (24 hours at 23 °C and 50% relative humidity). Water is sprayed onto the coated surface with a shower and the degree of water sensitivity determined by observing the extent of which the first tinted area has been revealed.

### Examples 1 to 6

The following paint compositions as detailed in Table 1 were prepared in accordance with the general procedures detailed herein. The figures in Table 1 represent the % by weight of each ingredient. For example, Example 1 includes 20 wt% Hydro PLIOLITE (40% solids, 45% water and 15% solvent) which constitutes 8 wt% of the styrene acrylic polymer plus plasticiser (approximately 1:1 ratio by weight), 9 wt% water, and 3 wt% solvent, based on the total weight of the composition. Similarly, 5 wt% of D2040 (48% solids and 52% water) in Example 1 represents 2.4 wt% of acrylic resin and 2.6 wt% water, based on the total weight of the composition. Thus the composition of Example 1 includes 36.12 wt% water in total.

Comparative Example A incudes the same overall resin content as Example 1, but the resin includes D2040 acrylic resin only.

Comparative Example B includes the same overall resin content as Example 1, but the resin includes Hydro PLIOLITE styrene acrylic resin only.

**Table 1**

| **Example** | **Biocide** | **Dispelair** | **Coatex** | **Ammonia 20%** | **TiO₂** | **Talc** | **CaCO₃** | **Cellosize** | **Hydro PLIOLITE** | **D2040** | **DM772** | **Organic Solvent Additional** | **Water Additional** | **Total Water Content** |
|---|---|---|---|---|---|---|---|---|---|---|---|---|---|---|
| 1 | 0.08 | 0.5 | 0.5 | 0.1 | 15 | 5 | 30 | 0.3 | 20 | 5 | - | - | 24.52 | 36.12 |
| 2 | 0.06 | 0.1 | 0.5 | 0.05 | 25 | 10 | 20 | 0.1 | 20 | 10 | - | - | 14.19 | 28.39 |
| 3 | 0.05 | 0.1 | 0.5 | 0.1 | 10 | 5 | 40 | 0.1 | 10 | 20 | - | - | 14.15 | 29.05 |
| 4 | 0.05 | 0.1 | 0.5 | 0.1 | 10 | 5 | 40 | 0.1 | 10 | - | 20 | - | 14.15 | 27.85 |
| 5 | 0.06 | 0.1 | 0.5 | 0.05 | 25 | 10 | 20 | 0.1 | 20 | - | 10 | - | 14.19 | 27.79 |
| 6 | 0.08 | 0.5 | 0.5 | 0.1 | 15 | 5 | 30 | 0.3 | 24 | - | 5 | - | 19.52 | 32.62 |
| Comparative Example A | 0.08 | 0.5 | 0.5 | 0.1 | 15 | 5 | 30 | 0.3 | - | 13.33 | - | 3 | 32.19 | 39.12 |
| Comparative Example B | 0.08 | 0.5 | 0.5 | 0.1 | 15 | 5 | 30 | 0.3 | 32 | - | - | - | 16.52 | 30.92 |

### Test Results

The composition of the present invention as detailed in Example 1, and the composition as detailed in Comparative Examples A and B were subjected to the test procedures as detailed herein. The results are presented in Table 2.

**Table 2**

| | **Example 1** | **Comparative Example A** | **Comparative Example B** |
|---|---|---|---|
| Adhesion | 5 | 2 | 3 |
| UV colour fastness | 4 | 3 | 2/3 |
| Washout colour fastness | 4 | 3 | 2 |
| Film water sensitivity | 4 | 3 | 2 |
| Solvent content % by wt | 3 | 3 | 4.8 |

In Table 2:
5 represents excellent;
4 represents good;
3 represents average;
2 represents poor; and
1 represents very poor.

As can be seen from the results of Table 2 the dried film of an aqueous coating composition of the present invention exhibits superior adhesion to a substrate compared with a comparable composition which includes only an acrylic binder (Comparative Example A) or only a styrene acrylic binder (Comparative Example B). Moreover, the dried film of the composition of the present invention exhibits improved UV colour fastness, improved washout colour fastness and film water sensitivity.

## Claims

1. An aqueous coating composition comprising a mixture of:
(i) an aqueous emulsion of a first polymeric film-forming resin; and
(ii) a second polymeric film-forming resin comprising an organic solution of a plasticised styrene acrylic copolymer emulsified in water.

2. An aqueous coating composition as claimed in claim 1, wherein the plasticised styrene acrylic copolymer is present in an amount of greater than or equal to 2 wt% and less than or equal to 15 wt%, preferably greater than or equal to 3 wt% and less than or equal to 7 wt% based on the total weight of the composition.

3. An aqueous coating composition as claimed in claim 1 or 2, wherein the styrene acrylic copolymer is derivable by polymerisation of a monomer mixture comprising one or more alkyl (meth)acrylate monomers and one or more optionally substituted styrene comonomers.

4. An aqueous coating composition as claimed in any one of the preceding claims, wherein the styrene-acrylic copolymer is derivable from a monomer mixture comprising greater than or equal to 30 wt% and less than or equal to 60 wt% of one or more alkyl (meth)acrylate comonomers and greater than or equal to 40 wt% and less than or equal to 70 wt% of one or more optionally substituted styrene comonomers.

5. An aqueous coating composition as claimed in claim 3 or 4, wherein the one or more alkyl (meth)acrylates comprises one or more C₁ to C₈ alkyl (meth)acrylates.

6. An aqueous coating composition as claimed in any one of claims 3 to 5, wherein the one or more optionally substituted styrene monomers are selected from one or more of unsubstituted styrene and C₁ to C₆ alkyl substituted styrene.

7. An aqueous coating composition as claimed in any one of the preceding claims, wherein the styrene acrylic copolymer is essentially not cross-linked.

8. An aqueous coating composition as claimed in any one of the preceding claims, wherein the styrene acrylic copolymer has a weight averaged molecular weight of greater than or equal to 50,000 Daltons.

9. An aqueous coating composition as claimed in any one of the preceding claims, wherein the styrene acrylic copolymer has a weight averaged molecular weight of less than or equal to 200,000 Daltons.

10. An aqueous coating composition as claimed in any one of the preceding claims, wherein the ratio by weight of the first polymeric film-forming resin to the plasticised styrene acrylic copolymer is 2:1 to 1:4.

11. An aqueous coating composition as claimed in any one of the preceding claims, wherein the first polymeric film-forming resin is selected from an acrylic resin, a styrene-acrylic resin, a polyvinyl acetate resin, a polyurethane resin, an alkyd resin or a polyalkyl siloxane.

12. An aqueous coating composition as claimed in any one of the preceding claims, wherein the first polymeric film-forming resin is an acrylic resin.

13. An aqueous coating composition as claimed in any one of the preceding claims, wherein the first polymeric film-forming resin is a copolymer.

14. An aqueous coating composition as claimed in any one of the preceding claims, wherein the first polymeric film-forming resin is present in an amount of 1 to 20% by weight, preferably 2 to 10% by weight, based on the total weight of the composition.

15. An aqueous coating composition as claimed in any one of the preceding claims wherein the first polymeric film-forming resin is essentially a non-thickening polymeric resin.

16. An aqueous coating composition as claimed in any one of the preceding claims further including a thickening agent.

17. An aqueous coating composition as claimed in any one of the preceding claims wherein the first polymeric film-forming resin has a weight average molecular weight of greater than or equal to 225,000 Daltons and less than or equal to 600,000 Daltons.

18. An aqueous coating composition as claimed in any one of the preceding claims wherein said coating composition further includes one or more pigments.

19. An aqueous coating composition as claimed in any one of the preceding claims wherein said coating composition further includes one or more extenders.

20. An aqueous coating composition as claimed in any one of the preceding claims, wherein the aqueous coating composition has a solids content of from 30 to 75 wt% based on the total weight of the composition.

21. An aqueous coating composition as claimed in any one of the preceding claims, wherein the aqueous coating composition consists essentially of:
(i) 1 to 20 wt% of the first polymeric film-forming resin;
(ii) 2 to 15 wt% of the plasticised styrene acrylic copolymer;
(iii) 5 to 25 wt% of one or more pigments;
(iv) 30 to 60 wt% of one or more extenders;
(v) 0.1 to 7 wt% of one or more thickeners;
(vi) 0 to 6 wt% of one or more adjuvants selected from antibacterial agents, antifoaming agents, pH regulators, wetting agents and dry film protection agents;
(vii) 3 to 8 wt% of an organic solvent; and
(viii) water present in an amount of greater than or equal to 10 wt% based on the total weight of the aqueous coating composition, such that the sum of the percent by weight of each of the components (i) to (viii) totals 100% by weight.

22. An aqueous coating composition as claimed in any one of the preceding claims, wherein the aqueous coating composition is in the form of a water based paint.

23. A method of preparing an aqueous coating composition as defined in any one of the preceding claims comprising contacting, preferably mixing, an aqueous emulsion of a first polymeric film-forming resin as defined in any one of the preceding claims with an organic solution of a plasticised styrene acrylic copolymer emulsified in water as defined in any one of the preceding claims.

24. A method as claimed in claim 23 further including the step of adding one or more pigments.

25. A method as claimed in claim 23 or 24 further including the step of adding one or more extenders.

26. A method of coating a substrate comprising applying the aqueous coating composition as defined in any one of claims 1 to 22 to a substrate.

27. A substrate comprising a layer of the aqueous coating composition as defined in any one of claims 1 to 22.

28. Use of an aqueous emulsion of a first polymeric film-forming resin as defined in any one of claims 1 to 22 in combination with a second polymeric film-forming resin as defined in any one of claims 1 to 22 for improving the UV colour fastness of a layer of an aqueous emulsion paint.

29. Use of an aqueous emulsion of a first polymeric film-forming resin as defined in any one of claims 1 to 22 in combination with a second polymeric film-forming resin as defined in any one of claims 1 to 22 for improving the washout colour fastness of a layer of an aqueous emulsion paint.

30. Use of an aqueous emulsion of a first polymeric film-forming resin as defined in any one of claims 1 to 22 in combination with a second polymeric film-forming resin as defined in any one of claims 1 to 22 for improving the film water sensitivity of a layer of an aqueous emulsion paint.

31. Use of an aqueous emulsion of a first polymeric film-forming resin as defined in any one of claims 1 to 22 in combination with a second polymeric film-forming resin as defined in any one of claims 1 to 22 for improving the cohesion of a layer of an aqueous emulsion paint.

32. Use of an aqueous emulsion of a first polymeric film-forming resin as defined in any one of claims 1 to 22 in combination with a second polymeric film-forming resin as defined in any one of claims 1 to 22 for improving the adhesion of a layer of an aqueous emulsion paint.

## Patentansprüche

1. Wässrige Beschichtungszusammensetzung, umfassend eine Mischung von:
(i) einer wässrigen Emulsion eines ersten filmbildenden Polymerharzes und
(ii) einem zweiten filmbildenden Polymerharz, das eine organische Lösung eines in Wasser emulgierten weichgemachten Styrol-Acryl-Copolymers umfasst.

2. Wässrige Beschichtungszusammensetzung nach Anspruch 1, wobei das weichgemachte Styrol-Acryl-Copolymer in einer Menge größer gleich 2 Gew.-% und kleiner gleich 15 Gew.-%, vorzugsweise größer gleich 3 Gew.-% und kleiner gleich 7 Gew.-%, bezogen auf das Gesamtgewicht der Zusammensetung, vorliegt.

3. Wässrige Beschichtungszusammensetzung nach Anspruch 1 oder 2, wobei das Styrol-Acryl-Copolymer durch Polymerisation einer Monomerenmischung, die ein oder mehrere Alkyl(meth)acrylat-Monomere und ein oder mehrere gegebenenfalls substituierte Styrolcomonomere umfasst, gewonnen werden kann.

4. Wässrige Beschichtungszusammensetzung nach einem der vorhergehenden Ansprüche, wobei das Styrol-Acryl-Copolymer aus einer Monomerenmischung, die größer gleich 30 Gew.-% und kleiner gleich 60 Gew.-% eines oder mehrerer Alkyl(meth)acrylat-Comonomere und größer gleich 40 Gew.-% und kleiner gleich 70 Gew.-% eines oder mehrerer gegebenenfalls substituierter Styrolcomonomere umfasst, gewonnen werden kann.

5. Wässrige Beschichtungszusammensetzung nach Anspruch 3 oder 4, wobei das Alkyl(meth)acrylat bzw. die Alkyl(meth)acrylate ein oder mehrere C₁- bis C₈-Alkyl(meth)acrylate umfasst bzw. umfassen.

6. Wässrige Beschichtungszusammensetzung nach einem der Ansprüche 3 bis 5, wobei das gegebenenfalls substituierte Styrolmonomer bzw. die gegebenenfalls substituierten Styrolmonomere unter unsubstituiertem Styrol und/oder C₁- bis C₆-alkyl-substituiertem Styrol ausgewählt sind.

7. Wässrige Beschichtungszusammensetzung nach einem der vorhergehenden Ansprüche, wobei das Styrol-Acryl-Copolymer im Wesentlichen nicht vernetzt ist.

8. Wässrige Beschichtungszusammensetzung nach einem der vorhergehenden Ansprüche, wobei das Styrol-Acryl-Copolymer ein gewichtsmittleres Molekulargewicht größer gleich 50.000 Dalton aufweist.

9. Wässrige Beschichtungszusammensetzung nach einem der vorhergehenden Ansprüche, wobei das Styrol-Acryl-Copolymer ein gewichtsmittleres Molekulargewicht kleiner gleich 200.000 Dalton aufweist.

10. Wässrige Beschichtungszusammensetzung nach einem der vorhergehenden Ansprüche, wobei das Gewichtsverhältnis von erstem filmbildendem Polymerharz zu weichgemachtem Styrol-Acryl-Copolymer 2:1 bis 1:4 beträgt.

11. Wässrige Beschichtungszusammensetzung nach einem der vorhergehenden Ansprüche, wobei das erste filmbildende Polymerharz unter einem Acrylharz, einem Styrol-Acryl-Harz, einem Polyvinylacetatharz, einem Polyurethanharz, einem Alkydharz oder einem Polyalkylsiloxan ausgewählt ist.

12. Wässrige Beschichtungszusammensetzung nach einem der vorhergehenden Ansprüche, wobei es sich bei dem ersten filmbildenden Polymerharz um ein Acryl-harz handelt.

13. Wässrige Beschichtungszusammensetzung nach einem der vorhergehenden Ansprüche, wobei es sich bei dem ersten filmbildenden Polymerharz um ein Copolymer handelt.

14. Wässrige Beschichtungszusammensetzung nach einem der vorhergehenden Ansprüche, wobei das erste filmbildende Polymerharz in einer Menge von 1 bis 20 Gew.-%, vorzugsweise 2 bis 10 Gew.-%, bezogen auf das Gesamtgewicht der Zusammensetzung, vorliegt.

15. Wässrige Beschichtungszusammensetzung nach einem der vorhergehenden Ansprüche, wobei es sich bei dem ersten filmbildenden Polymerharz im Wesentlichen um ein nicht verdickendes Polymerharz handelt.

16. Wässrige Beschichtungszusammensetzung nach einem der vorhergehenden Ansprüche, die ferner ein Verdickungsmittel umfasst.

17. Wässrige Beschichtungszusammensetzung nach einem der vorhergehenden Ansprüche, wobei das erste filmbildende Polymerharz ein gewichtsmittleres Molekulargewicht größer gleich 225.000 Dalton und kleiner gleich 600.000 Dalton aufweist.

18. Wässrige Beschichtungszusammensetzung nach einem der vorhergehenden Ansprüche, wobei die Beschichtungszusammensetzung ferner ein oder mehrere Pigmente umfasst.

19. Wässrige Beschichtungszusammensetzung nach einem der vorhergehenden Ansprüche, wobei die Beschichtungszusammensetzung ferner ein oder mehrere Streckmittel umfasst.

20. Wässrige Beschichtungszusammensetzung nach einem der vorhergehenden Ansprüche, wobei die wässrige Beschichtungszusammensetzung einen Feststoffgehalt von 30 bis 75 Gew.-%, bezogen auf das Gesamtgewicht der Zusammensetzung, aufweist.

21. Wässrige Beschichtungszusammensetzung nach einem der vorhergehenden Ansprüche, wobei die wässrige Beschichtungszusammensetzung im Wesentlichen aus:
(i) 1 bis 20 Gew.-% des ersten filmbildenden Polymerharzes;
(ii) 2 bis 15 Gew.-% des weichgemachten Styrol-Acryl-Copolymers;
(iii) 5 bis 25 Gew.-% eines oder mehrerer Pigmente;
(iv) 30 bis 60 Gew.-% eines oder mehrerer Streckmittel;
(v) 0,1 bis 7 Gew.-% eines oder mehrerer Verdickungsmittel;
(vi) 0 bis 6 Gew.-% eines oder mehrerer Hilfsstoffe, ausgewählt unter antibakteriellen Mitteln, Antischaummitteln, pH-Reglern, Netzmitteln und Trockenfilmschutzmitteln;
(vii) 3 bis 8 Gew.-% eines organischen Lösungsmittels und
(viii) Wasser in einer Menge größer gleich 10 Gew.-%, bezogen auf das Gesamtgewicht der wässrigen Beschichtungszusammensetzung, so dass die Summe der Gewichtsprozentanteile jeder der Komponenten (i) bis (viii) sich auf 100 Gew.-% beläuft;
besteht.

22. Wässrige Beschichtungszusammensetzung nach einem der vorhergehenden Ansprüche, wobei die wässrige Beschichtungszusammensetzung in Form einer auf Wasser basierenden Farbe vorliegt.

23. Verfahren zur Herstellung einer wässrigen Beschichtungszusammensetzung gemäß einem der vorhergehenden Ansprüche, bei dem man eine wässrige Emulsion eines ersten filmbildenden Polymerharzes gemäß einem der vorhergehenden Ansprüche mit einer organischen Lösung eines in Wasser emulgierten weichgemachten Styrol-Acryl-Copolymers gemäß einem der vorhergehenden Ansprüche in Berührung bringt, vorzugsweise mischt.

24. Verfahren nach Anspruch 23, bei dem man ferner ein oder mehrere Pigmente zugibt.

25. Verfahren nach Anspruch 23 oder 24, bei dem man ferner ein oder mehrere Streckmittel zugibt.

26. Verfahren zum Beschichten eines Substrats, bei dem man die wässrige Beschichtungszusammensetzung gemäß einem der Ansprüche 1 bis 22 auf ein Substrat aufbringt.

27. Substrat mit einer Schicht der wässrigen Beschichtungszusammensetzung gemäß einem der Ansprüche 1 bis 22.

28. Verwendung einer wässrigen Emulsion eines ersten filmbildenden Polymerharzes gemäß einem der Ansprüche 1 bis 22 in Kombination mit einem zweiten filmbildenden Polymerharz gemäß einem der Ansprüche 1 bis 22 zur Verbesserung der UV-Farbechtheit einer Schicht einer wässrigen Emulsionsfarbe.

29. Verwendung einer wässrigen Emulsion eines ersten filmbildenden Polymerharzes gemäß einem der Ansprüche 1 bis 22 in Kombination mit einem zweiten filmbildenden Polymerharz gemäß einem der Ansprüche 1 bis 22 zur Verbesserung der Auswaschfarbechtheit einer Schicht einer wässrigen Emulsionsfarbe.

30. Verwendung einer wässrigen Emulsion eines ersten filmbildenden Polymerharzes gemäß einem der Ansprüche 1 bis 22 in Kombination mit einem zweiten filmbildenden Polymerharz gemäß einem der Ansprüche 1 bis 22 zur Verbesserung der Filmwasserempfindlichkeit einer Schicht einer wässrigen Emulsionsfarbe.

31. Verwendung einer wässrigen Emulsion eines ersten filmbildenden Polymerharzes gemäß einem der Ansprüche 1 bis 22 in Kombination mit einem zweiten filmbildenden Polymerharz gemäß einem der Ansprüche 1 bis 22 zur Verbesserung der Kohäsion einer Schicht einer wässrigen Emulsionsfarbe.

32. Verwendung einer wässrigen Emulsion eines ersten filmbildenden Polymerharzes gemäß einem der Ansprüche 1 bis 22 in Kombination mit einem zweiten filmbildenden Polymerharz gemäß einem der Ansprüche 1 bis 22 zur Verbesserung der Haftung einer Schicht einer wässrigen Emulsionsfarbe.

## Revendications

1. Composition aqueuse de revêtement comprenant un mélange de :
(i) une émulsion aqueuse d'une première résine filmogène polymère ; et
(ii) une seconde résine filmogène polymère comprenant une solution organique d'un copolymère acrylique-styrène plastifié émulsifié dans de l'eau.

2. Composition aqueuse de revêtement selon la revendication 1, dans laquelle le copolymère acrylique-styrène plastifié est présent en une quantité supérieure ou égale à 2 % en poids et inférieure ou égale à 15 % en poids, de préférence supérieure ou égale à 3 % en poids et inférieure ou égale à 7 % en poids, sur la base du poids total de la composition.

3. Composition aqueuse de revêtement selon la revendication 1 ou 2, dans laquelle le copolymère acrylique-styrène peut être dérivé par polymérisation d'un mélange de monomères comprenant un ou plusieurs monomères (méth)acrylates d'alkyle et un ou plusieurs comonomères styrènes facultativement substitués.

4. Composition aqueuse de revêtement selon l'une quelconque des revendications précédentes, dans laquelle le copolymère acrylique-styrène peut être dérivé d'un mélange de monomères comprenant une quantité supérieure ou égale à 30 % en poids et inférieure ou égale à 60 % en poids d'un ou plusieurs comonomères (méth)acrylates d'alkyle et une quantité supérieure ou égale à 40 % en poids et inférieure ou égale à 70 % en poids d'un ou plusieurs comonomères styrènes facultativement substitués.

5. Composition aqueuse de revêtement selon la revendication 3 ou 4, dans laquelle le ou les (méth)acrylates d'alkyle comprennent un ou plusieurs (méth)acrylates d'alkyle en C₁ à C₈.

6. Composition aqueuse de revêtement selon l'une quelconque des revendications 3 à 5, dans laquelle le ou les monomères styrènes facultativement substitués sont choisis parmi un ou plusieurs comonomères parmi le styrène non substitué et le styrène substitué par un alkyle en C₁ à C₆.

7. Composition aqueuse de revêtement selon l'une quelconque des revendications précédentes, dans laquelle le copolymère acrylique-styrène est essentiellement non réticulé.

8. Composition aqueuse de revêtement selon l'une quelconque des revendications précédentes, dans laquelle le copolymère acrylique-styrène a une masse moléculaire moyenne en poids supérieure ou égale à 50 000 Daltons.

9. Composition aqueuse de revêtement selon l'une quelconque des revendications précédentes, dans laquelle le copolymère acrylique-styrène a une masse moléculaire moyenne en poids inférieure ou égale à 200 000 Daltons.

10. Composition aqueuse de revêtement selon l'une quelconque des revendications précédentes, dans laquelle le rapport en poids de la première résine filmogène polymère au copolymère acrylique-styrène plastifié est de 2:1 à 1:4.

11. Composition aqueuse de revêtement selon l'une quelconque des revendications précédentes, dans laquelle la première résine filmogène polymère est choisie parmi une résine acrylique, une résine acrylique-styrène, une résine de poly(acétate de vinyle), une résine de polyuréthane, une résine alkyde ou un poly(alkylsiloxane).

12. Composition aqueuse de revêtement selon l'une quelconque des revendications précédentes, dans laquelle la première résine filmogène polymère est une résine acrylique.

13. Composition aqueuse de revêtement selon l'une quelconque des revendications précédentes, dans laquelle la première résine filmogène polymère est un copolymère.

14. Composition aqueuse de revêtement selon l'une quelconque des revendications précédentes, dans laquelle la première résine filmogène polymère est présente en une quantité de 1 à 20 % en poids, de préférence de 2 à 10 % en poids, sur la base du poids total de la composition.

15. Composition aqueuse de revêtement selon l'une quelconque des revendications précédentes dans laquelle la première résine filmogène polymère est essentiellement une résine polymère non épaississante.

16. Composition aqueuse de revêtement selon l'une quelconque des revendications précédentes comprenant en outre un agent épaississant.

17. Composition aqueuse de revêtement selon l'une quelconque des revendications précédentes dans laquelle la première résine filmogène polymère a une masse moléculaire moyenne en poids supérieure ou égale à 225 000 Daltons et inférieure ou égale à 600 000 Daltons.

18. Composition aqueuse de revêtement selon l'une quelconque des revendications précédentes, ladite composition de revêtement comprenant en outre un ou plusieurs pigments.

19. Composition aqueuse de revêtement selon l'une quelconque des revendications précédentes, ladite composition de revêtement comprenant en outre une ou plusieurs matières de charge.

20. Composition aqueuse de revêtement selon l'une quelconque des revendications précédentes, la composition aqueuse de revêtement ayant une teneur en matières solides de 30 à 75 % en poids sur la base du poids total de la composition.

21. Composition aqueuse de revêtement selon l'une quelconque des revendications précédentes, la composition aqueuse de revêtement étant essentiellement constituée de :
(i) 1 à 20 % en poids de la première résine filmogène polymère ;
(ii) 2 à 15 % en poids du copolymère acrylique-styrène plastifié ;
(iii) 5 à 25 % en poids d'un ou plusieurs pigments ;
(iv) 30 à 60 % en poids d'une ou plusieurs matières de charge ;
(v) 0,1 à 7 % en poids d'un ou plusieurs épaississants ;
(vi) 0 à 6 % en poids d'un ou plusieurs adjuvants choisis parmi les agents antibactériens, les agents antimousse, les régulateurs de pH, les agents mouillants et les agents de protection de feuil sec ;
(vii) 3 à 8 % en poids d'un solvant organique ; et
(viii) de l'eau présente en une quantité supérieure ou égale à 10 % en poids sur la base du poids total de la composition aqueuse de revêtement,
de façon telle que la somme des pourcentages en poids de chacun des composants (i) à (viii) s'élève à 100 % en poids.

22. Composition aqueuse de revêtement selon l'une quelconque des revendications précédentes, la composition aqueuse de revêtement étant sous la forme d'une peinture à base d'eau.

23. Procédé de préparation d'une composition aqueuse de revêtement telle que définie dans l'une quelconque des revendications précédentes comprenant la mise en contact, de préférence le mélange, d'une émulsion aqueuse d'une première résine filmogène polymère telle que définie dans l'une quelconque des revendications précédentes avec une solution organique d'un copolymère acrylique-styrène plastifié émulsifié dans de l'eau tel que défini dans l'une quelconque des revendications précédentes.

24. Procédé selon la revendication 23 comprenant en outre l'étape consistant à ajouter un ou plusieurs pigments.

25. Procédé selon la revendication 23 ou 24 comprenant en outre l'étape consistant à ajouter une ou plusieurs matières de charge.

26. Procédé de revêtement d'un substrat comprenant l'application de la composition aqueuse de revêtement telle que définie dans l'une quelconque des revendications 1 à 22 sur un substrat.

27. Substrat comprenant une couche de la composition aqueuse de revêtement telle que définie dans l'une quelconque des revendications 1 à 22.

28. Utilisation d'une émulsion aqueuse d'une première résine filmogène polymère telle que définie dans l'une quelconque des revendications 1 à 22 en association avec une seconde résine filmogène polymère telle que définie dans l'une quelconque des revendications 1 à 22 pour l'amélioration de la solidité de la couleur aux UV d'une couche d'une peinture en émulsion aqueuse.

29. Utilisation d'une émulsion aqueuse d'une première résine filmogène polymère telle que définie dans l'une quelconque des revendications 1 à 22 en association avec une seconde résine filmogène polymère telle que définie dans l'une quelconque des revendications 1 à 22 pour l'amélioration de la solidité de la couleur au lavage d'une couche d'une peinture en émulsion aqueuse.

30. Utilisation d'une émulsion aqueuse d'une première résine filmogène polymère telle que définie dans l'une quelconque des revendications 1 à 22 en association avec une seconde résine filmogène polymère telle que définie dans l'une quelconque des revendications 1 à 22 pour l'amélioration de la sensibilité du feuil à l'eau d'une couche d'une peinture en émulsion aqueuse.

31. Utilisation d'une émulsion aqueuse d'une première résine filmogène polymère telle que définie dans l'une quelconque des revendications 1 à 22 en association avec une seconde résine filmogène polymère telle que définie dans l'une quelconque des revendications 1 à 22 pour l'amélioration de la cohésion d'une couche d'une peinture en émulsion aqueuse.

32. Utilisation d'une émulsion aqueuse d'une première résine filmogène polymère telle que définie dans l'une quelconque des revendications 1 à 22 en association avec une seconde résine filmogène polymère telle que définie dans l'une quelconque des revendications 1 à 22 pour l'amélioration de l'adhérence d'une couche d'une peinture en émulsion aqueuse.
